# FASCICULE DE BREVET EUROPEEN

(11) **EP 1 450 145 B1**
(45) Date de publication et mention de la délivrance du brevet: **09.11.2005**
(21) Numéro de dépôt: 03292744.4
(22) Date de dépôt: 03.11.2003
(51) Int. Cl.: G01J 3/26

(54) **Demultiplexeur d'un signal lumineux**
Demultiplexer für ein Lichtsignal
Demultiplexer for a light signal

(30) Priorité: 07.02.2003 FR 0301445
(43) Date de publication de la demande: 25.08.2004
(73) Titulaire: ALCATEL, 75008 Paris (FR)
(72) Inventeur: Pain, Thierry, 06250 Mougins (FR)
(74) Mandataire: Smith, Bradford Lee

(56) Documents cités:
- WO-A-92/04653
- FR-A- 2 788 605
- US-A- 5 231 529
- YOHJI FUJII: "WAVELENGTH DEMULTIPLEXER THAT USES AN INTERFERENCE FILTER AND ACHROMATIC QUARTER-WAVE PLATES" OPTICS LETTERS, OPTICAL SOCIETY OF AMERICA, WASHINGTON, US, vol. 16, no. 5, 1 mars 1991 (1991-03-01), pages 345-347, XP000176127 ISSN: 0146-9592

## Description

Le sujet de cette invention est un démultiplexeur d'un signal lumineux.

On éprouve le besoin de séparer les composantes de longueurs d'onde différentes mêlées en un signal lumineux commun dans diverses applications afin d'analyser ou d'utiliser le signal à plusieurs endroits du spectre. L'une de ces applications concerne les chaînes de détection à lidar où le signal est émis vers un objet à étudier, renvoyé depuis cet objet puis mesuré.

Les dispositifs connus pour accomplir cette fonction de séparation pèchent en général par un manque de souplesse. Ainsi, les interféromètres de Mach-Zehnder ne permettent de séparer une série de longueurs d'onde que si elles sont régulièrement espacées ; sinon, une perte de transmission est subie. De façon analogue les dispositifs à miroir dichroïques ne conviennent qu'à des ensembles de longueurs d'onde qui sont suffisamment espacés spectralement.

Le brevet US-6 122 417-A décrit une batterie de cavités ou d'étalons de Fabry-Pérot. On sait que ces dispositifs composés d'empilements de couches minces ont la propriété d'être transparents à la lumière d'une longueur d'onde déterminée et réfléchissants pour les autres longueurs d'onde. Les cavités sont fabriquées sur un même substrat et atteintes successivement par le signal, qui cède à chacune la composante à laquelle elle est transparente. Cependant, le signal restant, réfléchi par les cavités, doit leur être renvoyé par une couche réfléchissante faisant face à la batterie. Le trajet du signal est oblique pour qu'il progresse d'une cavité à l'autre le long de la batterie. Le réglage de l'obliquité correcte peut être délicat, tout comme la fabrication de ce dispositif complexe, qui est de plus immuable.

Enfin, des polariseurs ont été utilisés pour séparer des composantes d'un signal électrique, l'une traversant le polariseur et l'autre étant réfléchie par lui, mais la séparation ne concerne pas les longueurs d'onde.

Le document "Wavelength demultiplexer that uses an interference filter and achromatic quarter-wave plates" de Yohji Fuiji (OPTICS LETTERS Vol. 16, No. 5, p.345-347 (publié 01-03-1991), ISSN 0146-9592) décrit un autre démultiplexeur.

L'objet de l'invention est l'élaboration d'un dispositif démultiplexeur d'un signal lumineux qui soit de construction commode et puisse être modifié facilement, notamment en ajoutant ou modifiant des canaux de détection et sans qu'on ne soit limité ni dans le choix des longueurs d'onde à étudier ni par l'état de polarisation de ces longueurs d'onde.

L'invention repose sur l'envoi successif du rayonnement à des moyens de filtrage des longueurs d'onde respectives qui peuvent encore être des étalons de Fabry-Pérot, mais qui sont ici avantageusement séparés et indépendants. Ils sont desservis par des polariseurs, dans un agencement qui permet cependant d'exploiter toutes les composantes de polarisation du signal.

Dans sa définition la plus générale, l'invention concerne un dispositif démultiplexeur d'un signal lumineux, comprenant : au moins un polariseur placé sur un trajet principal du signal et incliné par rapport à ce trajet pour définir un trajet dévié respectif coupant le trajet principal ; de deux côtés de chaque polariseur et à deux bouts opposés de chaque trajet dévié, un dispositif réfléchissant, certains au moins des dispositifs réfléchissants étant transparents à une longueur d'onde respective du signal ; des lames quart d'onde placées sur chaque trajet dévié entre le polariseur et les dispositifs réfléchissants ; et, à un bout du trajet principal, une autre lame quart d'onde puis un autre dispositif réfléchissant.

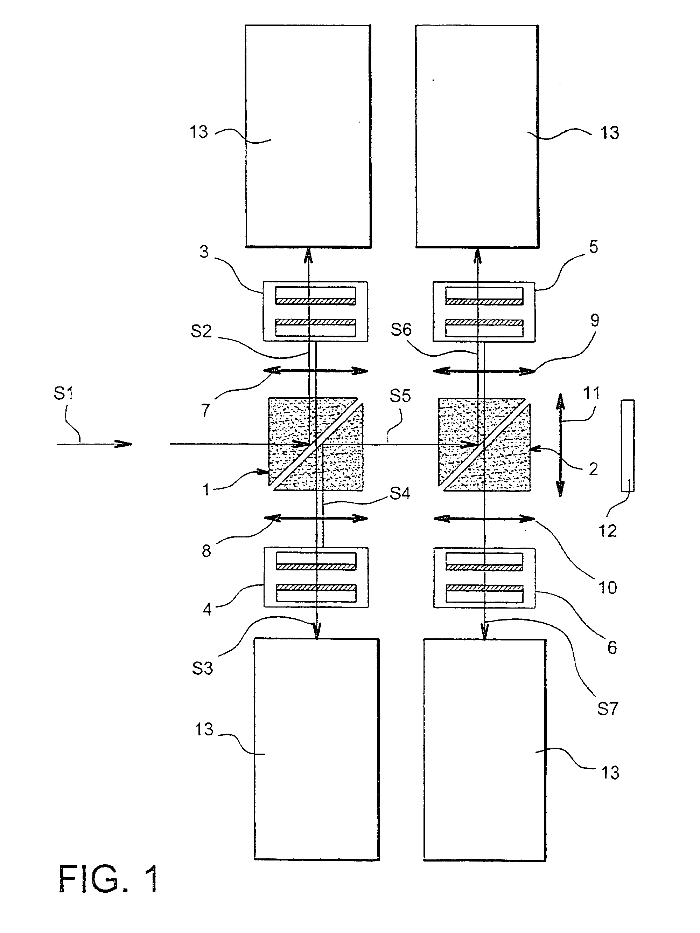

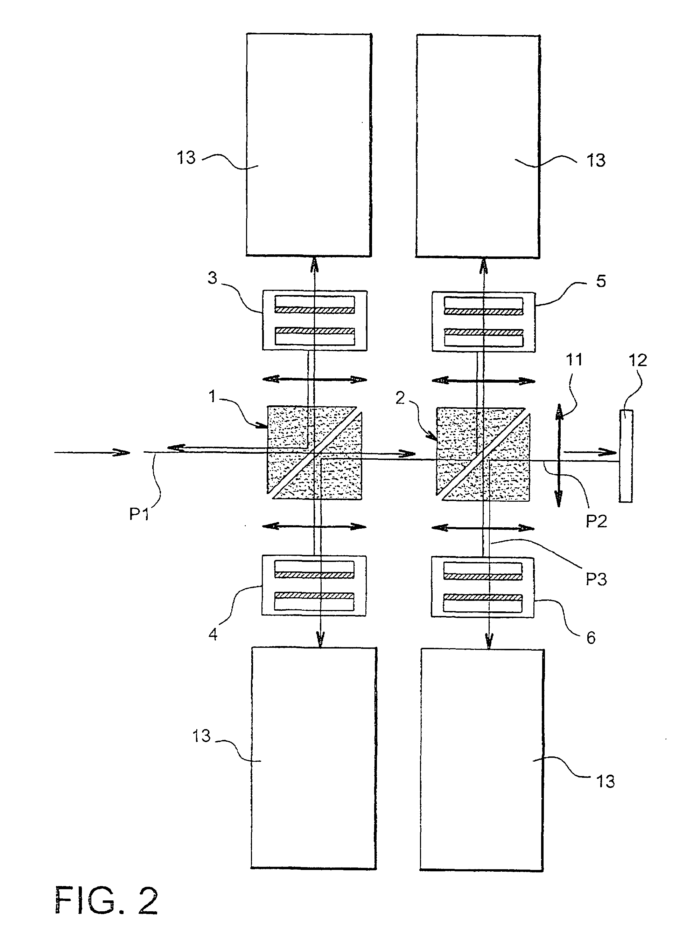

L'invention sera maintenant décrite au moyen des figures 1 et 2, qui représentent deux modes de fonctionnement du dispositif suivant la composante de polarisation de la lumière.

Se reportant aux deux figures, on voit que le dispositif comprend deux polariseurs 1 et 2, quatre étalons de Fabry-Pérot 3, 4, 5 et 6, cinq lames quart d'onde 7, 8, 9, 10 et 11 et un miroir 12. Si on excepte la dernière lame quart d'onde 11 et le miroir 12, les éléments du dispositif sont agencés en ensembles de même composition, c'est-à-dire qu'à chacun des polariseurs 1 et 2 sont associées une paire d'étalons et une paire de lames quart d'onde. Le nombre de ces ensembles est arbitraire et indéterminé, dépendant des besoins de l'utilisateur. Un seul pourrait suffire ou au contraire un grand nombre peut être nécessaire selon l'application. Les polariseurs 1 et 2 sont alignés sur un trajet principal, rectiligne, du signal lumineux à analyser au bout duquel se trouvent successivement la dernière lame quart d'onde 11 et le miroir 12 ; ils définissent aussi des trajets déviés du signal, coupant le trajet principal, au bout desquels on trouve les étalons 3 à 6 et, avant eux, les lames quart d'onde 7 à 10. En effet, ils sont inclinés de 45° par rapport au trajet principal, de sorte que les rayons lumineux qu'ils réfléchissent sur les trajets déviés sont à angle droit du trajet principal.

Examinons maintenant un trajet possible d'un signal pourvu de quatre longueurs d'onde de λ1, λ2, λ3 et λ4 mêlées qui se propage dans un même plan (Ce plan est matérialisé par le plan de la figure 1). Une composante de polarisation S de ce signal qui est perpendiculaire au plan de propagation emprunte d'abord un trajet S1 confondu avec le trajet principal jusqu'au polariseur 1 et se trouve réfléchie dans le premier trajet dévié, empruntant alors le trajet S2. Elle traverse la lame quart d'onde 7 et arrive à l'étalon 3 qui prélève la composante de longueur d'onde λ1 et réfléchit le reste du signal, qui emprunte alors un trajet S3 encore confondu avec le premier trajet dévié et repassant par le trajet S2 précédent et dans l'autre sens, jusqu'au polariseur 1 et encore au-delà, jusqu'à la lame quart d'onde 8 et l'étalon 4 opposé au précédent.

En effet, le double passage du signal à travers la lame quart d'onde 7 a changé sa polarisation d'un quart de tour qui devient parallèle au plan de propagation, de sorte qu'il traverse le polariseur 1 sans être réfléchi. L'étalon 4 prélève la composante de longueur d'onde λ2 et réfléchit le reste. Le trajet S4 qui suit du signal correspond au trajet S3 dans l'autre sens, jusqu'au polariseur 1. La double traversée de la lame quart d'onde 8 produit une nouvelle rotation de la polarisation d'un quart de tour, qui a cette fois pour conséquence de faire réfléchir le rayonnement restant sur le polariseur 1 et de lui faire reprendre le trajet principal selon le trajet S5, vers le polariseur 2 suivant. La suite du trajet est exactement similaire à ce qui précède : le rayonnement est réfléchi par le polariseur 2, emprunte un trajet S6 confondu avec le second trajet dévié jusqu'au troisième étalon 5 par la lame quart d'onde 9, puis un trajet S7 de l'étalon 5 à l'étalon 6 d'un bout à l'autre du second trajet dévié, en repassant par le polariseur 2 qui ne produit ici aucune réflexion du signal par suite de la double traversée de la lame quart d'onde 9. L'étalon 6 prélève donc la composante à la longueur d'onde de λ4, après que l'étalon 5 a prélevé la composante de longueur d'onde λ3. L'exploitation du composant S du signal est alors complétée.

Il faut considérer aussi l'autre composante de polarisation P du signal parallèle au plan de propagation. Suivant la figure 2 elle emprunte un premier trajet P1 confondu avec le trajet principal à travers les polariseurs 1 et 2 jusqu'au miroir 12, où le signal est réfléchi selon un deuxième trajet P2 opposé au précédent jusqu'au deuxième polariseur 2. Toutefois, le double passage à travers la dernière lame d'onde 11 lui a conféré une polarisation qui lui fait être réfléchi par le polariseur 2, et il est renvoyé vers l'étalon 6 selon le trajet P3.

La suite ne mérite qu'un commentaire général, puisque le trajet restant est exactement inverse de celui du composant S, de S7 à S1. L'aspect important est que le composant P passe aussi par chacun des étalons 3 à 6 par suite de déviations que lui imposent les polariseurs 1 et 2 combinés aux lames quart d'onde 7, 8, 9 et 10 et se voit mesuré par un prélèvement des mêmes longueurs d'ondes λ1, λ2, λ3 et λ4 que le composant P. La portion restante, inexploitée, du signal est renvoyée vers l'origine.

Certaines au moins des cavités de Fabry-Pérot pourraient être remplacées par des dispositifs réfléchissants "aveugles", comme des miroirs, qui permettraient de renvoyer le signal selon le même trajet mais sans prélever de composante. Le miroir 12 pourrait réciproquement être remplacé par une cavité de Fabry-Pérot.

Il est avantageux que les étalons de Fabry-Pérot soient accordables afin que la longueur d'onde prélevée puisse être modifiée.

Chacun des étalons 3 à 6 est associé à un dispositif d'exploitation 13 qui est d'un genre connu, pouvant par exemple comprendre un capteur CCD de conversion du signal optique en signal électrique, un amplificateur, un numériseur, etc.

## Revendications

1. Dispositif démultiplexeur d'un signal lumineux, comprenant : au moins un polariseur (1, 2) placé sur un trajet principal du signal et incliné par rapport à ce trajet pour définir un trajet dévié respectif coupant le trajet principal ; de deux côtés de chaque polariseur et à deux bouts opposés de chaque trajet dévié, un dispositif réfléchissant (3, 4, 5, 6), certains au moins des dispositifs réfléchissants étant transparents à une longueur d'onde respective du signal ; des lames quart d'onde (7, 8, 9, 10) placées sur chaque trajet dévié entre le polariseur et les dispositifs réfléchissants ; et, à un bout du trajet principal, une autre lame quart d'onde (11) puis un autre dispositif réfléchissant (12).

2. Dispositif démultiplexeur selon la revendication 1, **caractérisé en ce que** les dispositifs réfléchissants transparents à une longueur d'onde respective du signal sont des étalons de Fabry-Pérot accordables.

## Patentansprüche

1. Lichtsignal-Demultiplexervorrichtung, beinhaltend mindestens einen Polarisator (1, 2), der in einem Hauptsignalweg angeordnet und gegenüber diesem Weg so schräggestellt ist, daß er jeweils einen Nebensignalweg vorgibt, der den Hauptsignalweg schneidet; ferner an zwei Seiten jedes Polarisators und an zwei Enden gegenüber jedem Nebensignalweg eine reflektierende Vorrichtung (3, 4, 5, 6), wobei zumindest bestimmte der reflektierenden Vorrichtungen für eine jeweilige Wellenlänge des Signals transparent sind; des weiteren Lambda-Viertel-Plättchen (7, 8, 9, 10), die in jedem Nebensignalweg zwischen dem Polarisator und den reflektierenden Vorrichtungen angeordnet sind; sowie an einem Ende des Hauptsignalweges ein weiteres Lambda-Viertel-Plättchen (11) und schließlich eine weitere reflektierende Vorrichtung (12).

2. Demultiplexer-Vorrichtung gemäß Anspruch 1, **dadurch gekennzeichnet, daß** die für eine jeweilige Wellenlänge des Signals transparenten reflektierenden Vorrichtungen abstimmbare Fabry-Pérot-Etalons sind.

## Claims

1. Device for demultiplexing a light signal, comprising: at least one polarizer (1, 2) disposed on a main path of the signal and inclined to that path to define a respective deviated path intersecting the main path; on two sides of each polarizer and at two opposite ends of each deviated path, a reflecting device (3, 4, 5, 6), at least some of the reflecting devices being transparent at a respective wavelength of the signal; quarter-wave plates (7, 8, 9, 10) disposed on each deviated path between the polarizer and the reflecting devices; and, at one end of the main path, another quarter-wave plate (11) followed by another reflecting device (12).

2. Demultiplexing device according to claim 1, **characterized in that** the reflecting devices transparent at a respective wavelength of the signal are tunable Fabry-Pérot standard cells.
